# DEMANDE DE BREVET EUROPEEN

(11) **EP 4 491 423 A2**
(43) Date de publication de la demande: **15.01.2025**
(21) Numéro de dépôt: 24187801.6
(22) Date de dépôt: 10.07.2024
(51) Int. Cl.: B60H 1/32

(54) **AGENCEMENT POUR VÉHICULE COMPRENANT UN ACCUMULATEUR DE CLIMATISATION ET UN MOYEN D'AMORTISSEMENT DE L'ACCUMULATEUR**

(30) Priorité: 13.07.2023 FR 2307535
(71) Demandeur: Ampere SAS, 92100 Boulogne-Billancourt (FR)
(72) Inventeur: ARON, Edouard, 78280 GUYANCOURT (FR); GHIRARDINI, Armand, 78280 GUYANCOURT (FR)
(74) Mandataire: Renault Group

(57) **Abrégé**

L'invention porte sur un agencement 9 pour un véhicule, l'agencement 9 comprenant un accumulateur 3 pour un circuit de climatisation 2, l'accumulateur 3 comprenant une enveloppe externe 4, un élément 8 agencé à proximité de l'accumulateur 3, notamment un élément de type patte de fixation, l'agencement 9 comprenant un moyen d'amortissement 10 conformé au moins partiellement autour de l'enveloppe externe 4 de l'accumulateur 3 de sorte à éviter une déformation plastique de l'enveloppe externe 4 en cas de contact avec l'élément 8 suite à un choc subi par un tel véhicule.

## Description

### Domaine technique de l'invention

L'invention concerne un agencement pour un véhicule comprenant un accumulateur de climatisation, un élément et un moyen d'amortissement destiné à éviter une déformation plastique de l'accumulateur en cas de contact avec l'élément lors d'un choc d'un tel véhicule. L'invention porte encore sur un véhicule comprenant un tel agencement. L'invention porte encore sur un procédé de montage d'un tel agencement.

### Etat de la technique antérieure

Un véhicule, en particulier un véhicule automobile, doit satisfaire à des normes et/ou des réglementations en termes de comportements en cas de choc. En outre, notamment dans certains pays, des organismes évaluent la capacité à réparer et estiment les coûts afférents en cas de « petits » chocs, en particulier à l'avant des véhicules. De tels organismes attribuent alors une note au véhicule et cette note est prise en compte par les assureurs pour déterminer le coût du montant de l'assurance à payer par le propriétaire d'un tel véhicule. Des coûts faibles de réparation du véhicule abaissent ainsi le montant de l'assurance. Ce faible montant de l'assurance est même un argument de vente, en particulier en cas d'achat d'un lot important de véhicules telle qu'une flotte de véhicules.

En cas de châssis de véhicule comportant un faible porte à faux avant, et par conséquent de compartiment moteur exiguë, un accumulateur d'un circuit de climatisation est agencé à l'avant d'un tel compartiment moteur. En effet, un tel accumulateur présente un volume conséquent qui empêche son intégration dans une autre zone d'un tel compartiment moteur. Seulement, cet emplacement engendre qu'un tel accumulateur est impacté au moindre choc avant. En outre, un tel accumulateur est onéreux et complexe à changer, notamment du fait qu'il fasse partie d'un circuit de climatisation.

### Présentation de l'invention

Le but de l'invention est de fournir un agencement remédiant aux inconvénients ci-dessus. En particulier, l'invention propose un agencement comprenant un moyen d'amortissement permettant de préserver l'intégrité de l'accumulateur de climatisation en cas de petit choc avant.

### Résumé de l'invention

Pour atteindre cet objectif, l'invention porte sur un agencement pour un véhicule, notamment pour un véhicule automobile, l'agencement comprenant :
- un accumulateur pour un circuit de climatisation, l'accumulateur comprenant une enveloppe externe,
- un élément agencé à proximité de l'accumulateur, notamment un élément de type patte de fixation,
l'agencement comprenant un moyen d'amortissement conformé au moins partiellement autour de l'enveloppe externe de l'accumulateur de sorte à éviter une déformation plastique de l'enveloppe externe en cas de contact avec l'élément suite à un choc subi par un tel véhicule.

Le moyen d'amortissement peut comprendre une première partie et une deuxième partie pour permettre un montage ultérieur du moyen d'amortissement au niveau de l'enveloppe de l'accumulateur s'étendant le long d'un axe de révolution ou axe principal.

La première partie peut comprendre un premier moyen de fixation et la deuxième partie peut comprendre un deuxième moyen de fixation, le premier moyen de fixation pouvant être apte à coopérer avec le deuxième moyen de fixation.

Le premier moyen de fixation et le deuxième moyen de fixation peuvent former ensemble une liaison glissière, notamment selon la direction verticale ou sensiblement verticale, ou notamment selon l'axe de révolution ou axe principal de l'accumulateur.

La première partie peut comprendre un premier décrochement et la deuxième partie peut comprendre un deuxième décrochement, les premier et deuxième décrochements pouvant venir au contact l'un de l'autre pour assurer un blocage de la première partie par rapport à la deuxième partie, notamment selon la direction verticale.

L'enveloppe externe de l'accumulateur peut avoir une forme sensiblement cylindrique autour de l'axe principal, les première et deuxième parties du moyen d'amortissement pouvant former une coque cylindrique d'axe confondu ou sensiblement confondu avec l'axe principal, l'axe principal s'étendant notamment sensiblement verticalement.

L'épaisseur du moyen d'amortissement mesurée radialement par rapport à l'axe principal peut être comprise entre 10 mm et 25 mm, notamment de l'ordre de 17 mm, et/ou le moyen d'amortissement peut être en polypropylène expansé ou en polystyrène ayant une densité comprise entre 45 grammes par litre et 200 grammes par litre, notamment comprise entre 70 grammes par litre et 90 grammes par litre.

L'agencement peut comprendre une caisse d'un tel véhicule, au moins un conduit de climatisation connecté à l'accumulateur, et un support pour la fixation de l'accumulateur sur la caisse.

Le support peut créer une butée lors de la mise en place du moyen d'amortissement, notamment selon la direction verticale, notamment par contact du moyen d'amortissement avec le support.

Le support peut être fixé sur la caisse par au moins un moyen de fixation, notamment de type vis, l'au moins un moyen de fixation pouvant prendre en sandwich le support entre le moyen de fixation, notamment une tête de vis, et la caisse,
l'au moins un moyen de fixation pouvant traverser au moins une gorge ménagée dans le support, l'au moins une gorge pouvant être débouchante et pouvant s'étendre sensiblement longitudinalement vers l'avant, de sorte à permettre le recul du support par rapport à la caisse par glissement du support contre le moyen de fixation le long de la gorge en cas de choc à l'avant d'un tel véhicule.

L'invention porte encore sur un véhicule, notamment un véhicule automobile, le véhicule comprenant un agencement tel que défini précédem ment.

L'invention porte encore sur un procédé de montage d'un agencement tel que défini précédemment, le procédé comprenant :
- une étape de fourniture d'une caisse, d'un support, d'un accumulateur, d'au moins un conduit de climatisation, et d'un moyen d'amortissement,
- suivie d'une étape de montage du support sur la caisse puis du montage de l'accumulateur sur le support, ou d'une étape de montage de l'accumulateur sur le support puis du montage du support sur la caisse,
- suivie ou précédée d'une étape de branchement de l'au moins un conduit de climatisation sur l'accumulateur,
- suivie d'une étape de montage du moyen d'amortissement au niveau de l'accumulateur.

### Présentation des figures

Ces objets, caractéristiques et avantages de la présente invention seront exposés en détail dans la description suivante d'un mode de réalisation d'un agencement et d'un mode d'exécution d'un procédé de montage de l'agencement faite à titre non-limitatif en relation avec les figures jointes parmi lesquelles :
La figure 1 est une vue schématique d'un véhicule automobile selon un mode de réalisation de l'invention.
La figure 2 est une vue en perspective d'un agencement selon un mode de réalisation de l'invention.
La figure 3 est une vue en perspective partielle de l'agencement selon le mode de réalisation de l'invention.
La figure 4 est une vue en perspective partielle d'un support, d'un accumulateur et d'un moyen d'amortissement selon un mode de réalisation de l'invention.
La figure 5 est une autre vue en perspective partielle du support, de l'accumulateur et du moyen d'amortissement selon le mode de réalisation de l'invention.
La figure 6 est une vue de dessus du support, de l'accumulateur et du moyen d'amortissement selon le mode de réalisation de l'invention.
La figure 7 est une vue en perspective du moyen d'amortissement selon le mode de réalisation de l'invention.
La figure 8 est une vue en perspective d'une première partie du moyen d'amortissement, de l'accumulateur et d'un support selon le mode de réalisation de l'invention.
La figure 9 est une vue en perspective d'une deuxième partie du moyen d'amortissement selon le mode de réalisation de l'invention.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

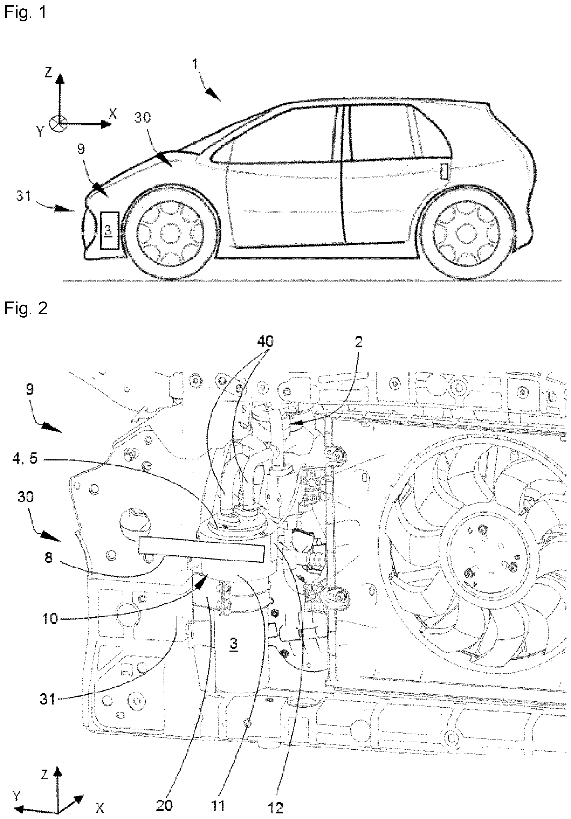

La figure 1 illustre schématiquement un véhicule, de préférence un véhicule automobile 1. Le véhicule comprend une caisse 30. Le véhicule ou la caisse comprend de préférence une face avant technique 31. Le véhicule 1 comprend un agencement 9. Le véhicule comprend un circuit de climatisation 2 dans lequel circule un fluide. Le circuit de climatisation 2 comprend un accumulateur du fluide de climatisation 3 ou déshydrateur ou bouteille déshydrateur. Le circuit de climatisation 2 comprend encore des tuyaux 40, raccords, conduits ou durites comme illustré sur la figure 2. De préférence, comme illustré notamment sur les figures 2 à 6, l'accumulateur 3 a une forme générale cylindrique ou sensiblement cylindrique. De préférence encore, l'accumulateur 3 est agencé de sorte à ce que son axe de révolution ou axe principal AP soit orienté selon la direction verticale ou sensiblement verticale. L'accumulateur 3 comprend une enveloppe externe 4. En cas d'accumulateur de forme cylindrique, l'enveloppe externe 4 a une forme cylindrique ou sensiblement cylindrique.

Plus précisément, l'agencement 9 comprend l'accumulateur 3 pour le circuit de climatisation 2.

L'agencement 9 comprend encore un élément 8 agencé à proximité de l'accumulateur 3. Par exemple, l'élément 8 est une patte de fixation. Par exemple, cette patte de fixation est fixée sur une traverse. Alternativement, l'élément 8 est une traverse ou une partie rigide du circuit de climatisation, par exemple un échangeur.

De manière générale, l'élément 8 est une partie du véhicule ayant une rigidité supérieure à celle de l'accumulateur 3, tout du moins plus rigide que l'enveloppe externe 4 de l'accumulateur. Par « enveloppe externe », on entend la surface externe, ou peau externe, de l'accumulateur c'est-à-dire la zone de l'accumulateur susceptible d'être déformée en cas de contact contre l'élément 8, lors d'un choc en particulier.

L'agencement 9 comprend encore un moyen d'amortissement 10, une protection, un amortisseur de chocs, un écran amortissant. Ce moyen d'amortissement 10 est conformé au moins partiellement autour de l'enveloppe externe 4 de l'accumulateur 3. Ainsi, en cas d'accrochage frontal ou accident à basse vitesse du véhicule 1, on évite une déformation plastique de l'enveloppe externe 4 ayant un contact avec l'élément 8 comme il sera expliqué par la suite.

Le moyen d'amortissement 10 comprend une première et une deuxième parties 11, 12. De préférence, le moyen d'amortissement 10 forme une coque cylindrique 15 d'axe confondu ou sensiblement confondu avec l'axe principal AP. L'axe principal AP s'étend de préférence sensiblement verticalement.

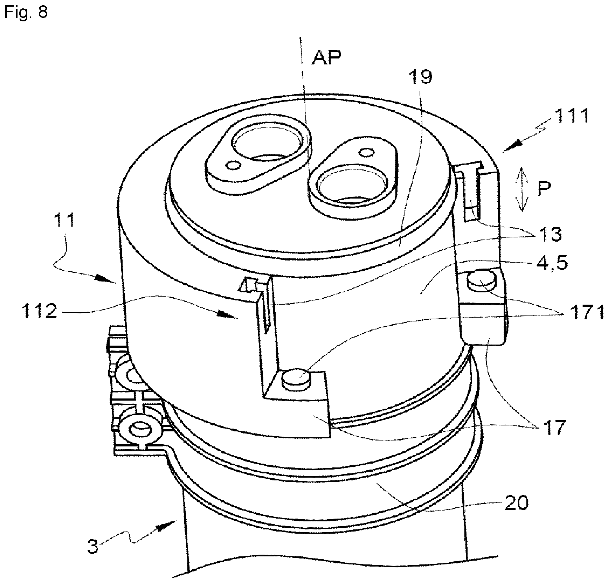

Avantageusement, le moyen d'amortissement 10 s'étend autour d'une partie supérieure 5 de l'enveloppe externe 4, en particulier illustrée sur la figure 8. C'est notamment le cas lorsque l'élément 8 est agencé devant la partie supérieure 5 de l'accumulateur 3 au même niveau ou sensiblement au même niveau selon la direction verticale comme illustré sur la figure 2.

En cas de partie supérieure 5 de forme cylindrique d'axe confondu ou sensiblement confondu avec l'axe principal AP de l'accumulateur, le moyen d'amortissement a également une forme cylindrique et entoure ainsi la partie supérieure 5, par exemple avec une épaisseur radiale constante sur toute la circonférence de la partie supérieure.

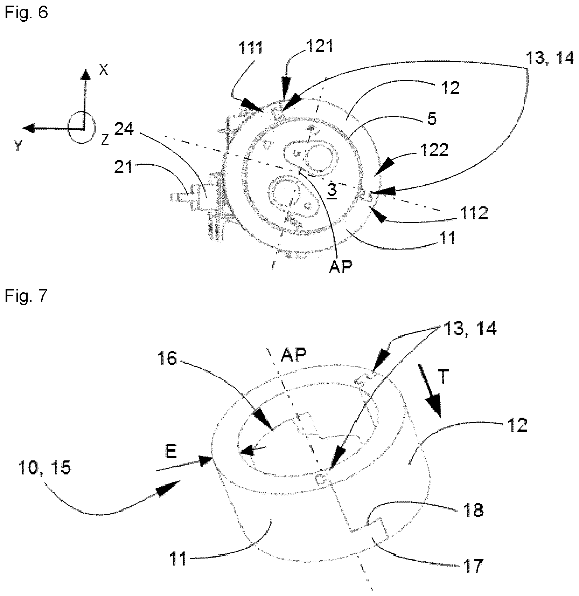

Comme illustré notamment sur la figure 6, la première partie 11 et la deuxième partie 12 s'étendent autour de la partie supérieure 5 de l'accumulateur 3. Par exemple, comme illustré en particulier sur la figure 6, la première partie 11 s'étend sensiblement sur les deux tiers de la circonférence (soit environ 240 degrés) de la partie supérieure 5 et la deuxième partie 12 s'étend sensiblement sur l'autre tiers (soit environ 120 degrés) de la circonférence de la partie supérieure 5.

Comme il sera expliqué par la suite, les première et deuxième parties 11, 12 peuvent être assemblées l'une avec l'autre tout en étant démontables, dissociables, l'une de l'autre. Cette particularité vise notamment à permettre un montage du moyen d'amortissement 10 au niveau de l'enveloppe 4 de l'accumulateur 3, plus précisément de la partie supérieure 5, alors que l'accumulateur 3 est monté sur la caisse 30, ou sur la face avant technique 31. Dans ce cas, les conduits 40 du circuit 2 sont déjà reliés, branchés, notamment à l'accumulateur 3 c'est pourquoi un moyen d'amortissement 10 de forme annulaire classique ne serait pas apte à être monté.

Alternativement, selon un mode de réalisation non illustré, le moyen d'amortissement ne comprend qu'une seule partie de forme générale cylindrique présentant une ouverture. Dans ce cas, une coupe du moyen d'amortissement selon un plan perpendiculaire à son axe a une forme générale de C. L'ouverture du C offre un passage pour les conduits du circuit de climatisation et permet le montage du moyen d'amortissement sur la partie supérieure de l'enveloppe alors que le circuit est déjà installé.

Dans le mode de réalisation illustré, la première partie 11 comprend un premier moyen de fixation 13 et la deuxième partie 12 comprend un deuxième moyen de fixation 14. Le premier moyen de fixation 13 est apte à coopérer avec le deuxième moyen de fixation 14. Par exemple, le premier moyen de fixation 13 et le deuxième moyen de fixation 14 forment ensemble une liaison glissière. Avantageusement la glissière formée s'étend selon la direction verticale ou sensiblement verticale. Comme illustré notamment sur les figures 6 et 7 notamment, les premier et deuxième moyens de fixation 13, 14 ont chacun une section selon un plan perpendiculaire à l'axe du moyen d'amortissement prévue pour s'emboiter, s'imbriquer, se compléter l'une avec l'autre. Par exemple, chaque section a une forme similaire à une portion de pièces de puzzle ou en forme générale de T. Plus précisément, comme illustré en particulier sur les figures 6, 8 et 9, la première partie 11 comprend un premier moyen de fixation 13 à chacune de ses extrémités 111, 112 et la deuxième partie 12 comprend un deuxième moyen de fixation 14 à chacune de ses extrémités 121, 122. Par exemple, le premier moyen de fixation 13 a une section selon un plan perpendiculaire à l'axe AP en forme de oméga et le deuxième moyen de fixation 14 a une section complémentaire selon un plan perpendiculaire à l'axe AP, c'est-à-dire complétant la forme intérieure du oméga.

Alternativement, le deuxième moyen de fixation a une section, selon un plan perpendiculaire à un axe confondu ou sensiblement confondu avec l'axe principal, en forme de oméga et le premier moyen de fixation a une section complémentaire, selon un plan perpendiculaire à un axe confondu ou sensiblement confondu avec l'axe principal, c'est-à-dire complétant la forme intérieure du oméga. Alternativement encore, le premier moyen de fixation a une section en forme de queue-d'aronde mâle et le deuxième moyen de fixation a une section complémentaire en forme de queue-d'aronde femelle. Alternativement encore, le premier moyen de fixation a une section en forme de queue-d'aronde femelle et le deuxième moyen de fixation a une section complémentaire en forme de queue-d'aronde mâle.

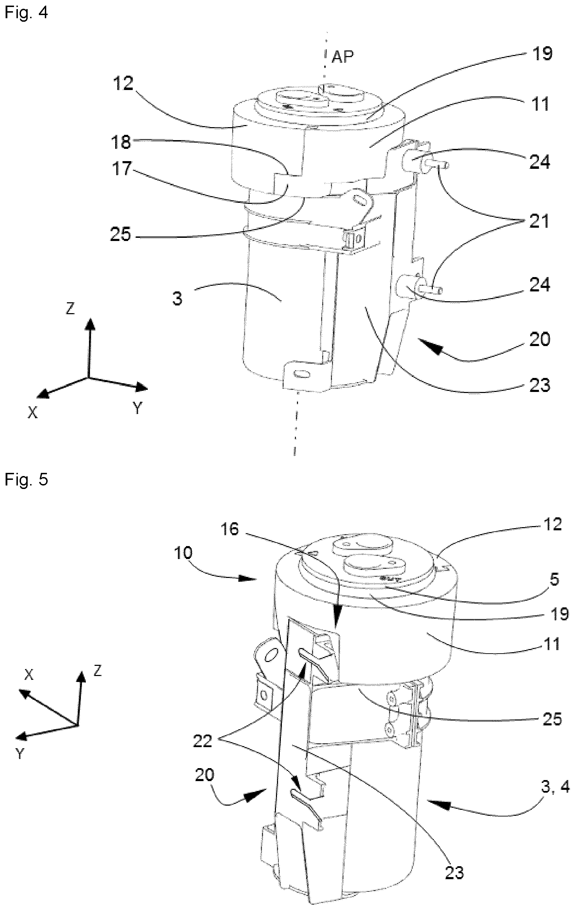

De préférence, comme illustré en particulier sur les figures 4, 7, 8 et 9, la premier partie 11 comprend un premier décrochement 17 ou ergot s'étendant en saillie depuis chaque extrémité 111, 112 de la première partie 11. Dans ce cas, la deuxième partie 12 comprend un deuxième décrochement 18 ou échancrure ou évidement au niveau de chacune de ses extrémités 121, 122. Avantageusement, le premier décrochement 17 et le deuxième décrochement 18 sont ménagés de sorte à se compléter l'un avec l'autre lorsqu'ils sont au contact l'un de l'autre. Ainsi, après assemblage des deux parties 11, 12, les décrochements 17, 18 sont au contact l'un de l'autre ou sensiblement au contact l'un de l'autre de sorte que la forme générale du moyen d'amortissement soit cylindrique. La fonction des décrochements 17, 18 est d'assurer un blocage, une butée, une fin de course de la première partie 11 par rapport à la deuxième partie 12 lors du coulissement, de la translation selon la glissière créée par les moyens de fixation 13, 14.

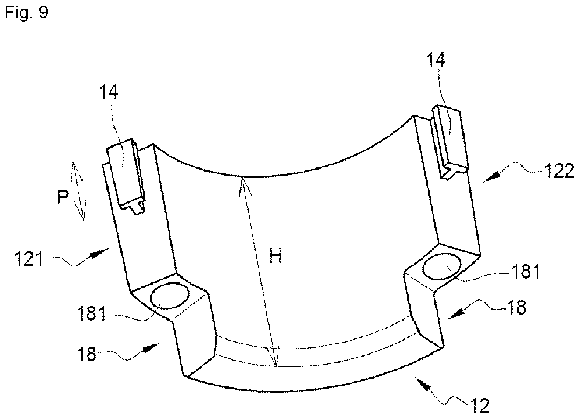

De préférence, comme illustré sur la figure 8, chaque premier décrochement 17 comprend une saillie 171 de type plot ou excroissance cylindrique s'étendant vers le haut. De préférence, comme illustré sur la figure 9, chaque deuxième décrochement 18 comprend une cavité 181 de type creux cylindrique s'étendant vers le haut. Ainsi, une fois les parties 11, 12 assemblées, à l'issue du coulissement entre elles, la saillie 171 au niveau de l'extrémité 111 de la première partie 11 vient coopérer, pénétrer dans la cavité 181 au niveau de l'extrémité 121 de la deuxième partie 12, et simultanément, ou sensiblement simultanément, la saillie 171 au niveau de l'extrémité 112 de la première partie 11 vient coopérer, pénétrer dans la cavité 181 au niveau de l'extrémité 122 de la deuxième partie 12.

De préférence, cette translation se fait selon la direction verticale ou sensiblement verticale, de préférence du haut vers le bas. Dans ce cas, comme illustré, le premier décrochement 17 de type saillie est ménagée en bas de la première partie 11 de sorte à stopper la course de la deuxième partie 12 par rapport à la première partie 11 le long de la glissière 13, 14. Le décrochement 18 est alors ménagée également en bas de la deuxième partie 12. De préférence, comme illustré sur les figures 8 et 9, les moyens de fixation 13, 14 formant une glissière ne s'étendent pas sur toute la hauteur H des première et deuxième parties 11, 12 mesurée parallèlement à l'axe de la coque de protection cylindrique 15 ainsi formée, mais sur une portion seulement de l'ordre de 30 pourcent de cette hauteur, voire moins. Ainsi le guidage de type liaison glissière est assuré sur une portion P seulement de la hauteur H illustrée sur les figure 8 et 9. Les deux couples plots / cavités 171, 181, de préférence en forme générale cylindrique, permettent d'assurer la fin de liaison glissière entre la première partie 11 et la deuxième partie 12.

Comme illustré sur la figure 7, l'épaisseur E du moyen d'amortissement 10 mesurée radialement par rapport à l'axe principal AP est comprise entre 10 mm et 25 mm, par exemple de l'ordre de 17 mm. De préférence, le moyen d'amortissement 10 est en polypropylène expansé. Alternativement, le moyen d'amortissement 10 est en polystyrène. De préférence, la densité du matériau est comprise entre 45 grammes par litre et 200 grammes par litre, de préférence comprise entre 70 grammes par litre et 90 grammes par litre.

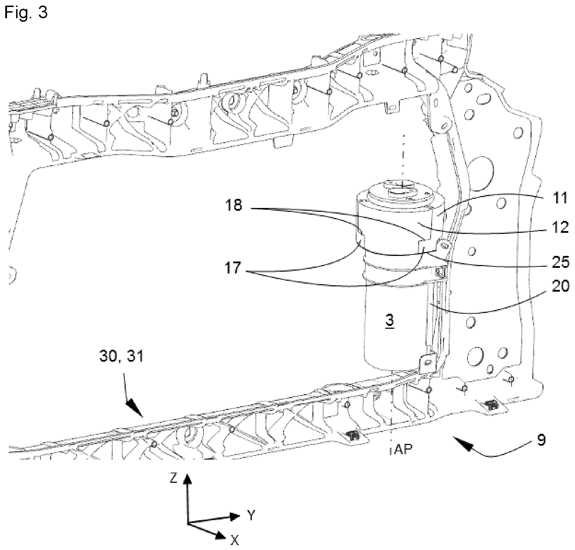

Par exemple, l'agencement 9 comprend la caisse 30 du véhicule, et/ou la face avant technique 31. De préférence, l'agencement 9 comprend au moins un conduit 40 de climatisation connecté à l'accumulateur 3. De préférence, l'agencement 9 comprend encore un support 20 pour la fixation de l'accumulateur 3 sur la caisse 30. Par exemple, le support 20 crée, forme, offre une butée 25 pour le moyen d'amortissement 10. Plus précisément, de préférence le support 20 crée une butée pour la première partie 11, c'est-à-dire la partie montée en premier autour de l'accumulateur 3. Pour rappel, de préférence, la fin de course de la liaison glissière entre la première partie 11 et la deuxième partie 12, c'est-à-dire la fin de la translation entre les moyens 13, 14 selon la direction T (voir figure 7), est assurée par des contacts entre les décrochements 17, 18. Alternativement ou en complément, comme illustré sur la figure 3, une partie 25 du support 20 crée une butée pour la fin de course lors du montage de la deuxième partie 12 le long de la première partie 11. Quoi qu'il en soit, la mise en place du moyen d'amortissement 10, en particulier selon la direction verticale, c'est-à-dire selon la direction T, est facilitée par un contact d'au moins une partie 11, 12, voire les deux, avec le support 20, en particulier la partie 25. Par exemple la partie 25 est de type collier venant encercler, entourer l'enveloppe externe 4 de l'accumulateur 3 à protéger.

De préférence, comme illustré en particulier sur les figures 4, 5 et 8, l'accumulateur 3 ou l'enveloppe externe 4 de l'accumulateur comprend un renflement 19, une excroissance, une bordure, s'étendant à l'extrémité supérieure de l'accumulateur, de préférence sur toute la circonférence de la partie supérieure 5. Ce renflement 19 crée une sorte de jonc d'arrêt empêchant le déboitement de la deuxième partie 12 depuis la première partie. Autrement dit, le renflement 19 crée une butée empêchant une translation, selon le sens inverse de la direction T, de sorte à éviter que les deux parties 11, 12 ne se démontent, ne se désengagent l'une de l'autre de manière intempestive.

Eventuellement, comme illustré sur les figures 5 et 7, la première partie 11 comprend une encoche 16. Ainsi, l'enfilement de la première partie 11 sur l'accumulateur 3 ne vient pas buter contre le support 20. Eventuellement, cette encoche 16 fait office de butée, de fin de course selon la direction verticale de préférence, pour le placement de la première partie 11 par rapport au support 20. En outre, la coopération du support 20 dans l'encoche 16 bloque tout pivotement de la première partie 11 (et donc du moyen d'amortissement) par rapport à l'enveloppe externe 4 de l'accumulateur et/ou tout pivotement de la première partie 11 (et donc du moyen d'amortissement) par rapport au support 20.

Avantageusement, le support 20 comprend une embase 23 s'étendant verticalement ou sensiblement verticalement. Le support 20 est fixé sur la caisse 30 et/ou sur la face avant technique 31 par au moins un moyen de fixation 21. Par exemple, comme illustré sur la figure 4, le moyen de fixation 21 est une vis ou une tige filetée s'étendant depuis l'embase 23. De préférence, deux moyens de fixation 21 sont prévus. De préférence, chaque moyen de fixation 21 prend en sandwich le support 20, en particulier l'embase 23, entre le moyen de fixation 21, par exemple une tête de vis et la caisse 30 et/ou la face avant technique 31. De préférence encore, comme illustré sur la figure 5, chaque moyen de fixation 21 traverse une gorge 22 ménagée dans le support 20, notamment dans l'embase 23. Chaque gorge 22 s'étend sensiblement horizontalement, selon la direction longitudinale, et débouche vers l'avant. Ainsi, chaque gorge 22 est une ouverture s'étendant sensiblement dans un plan transversal et longitudinal. Ainsi, en cas de choc à l'avant du véhicule, le support 20 peut reculer par rapport à la caisse 30 (en particulier par rapport à la face avant technique) par glissement du support 20 contre le moyen de fixation 21 le long de la gorge 22.

Un mode d'exécution d'un procédé de montage de l'agencement va maintenant être décrit.

Dans un premier temps, on procède à une étape de fourniture de la caisse 30 (de préférence équipée de la face avant technique 31), du support 20, de l'accumulateur 3, du ou des conduits 40 de climatisation, et du moyen d'amortissement 10.

On procède ensuite à une étape de montage du support 20 sur la caisse 30. Avantageusement, on procède plus précisément à une étape de montage de l'embase 23 du support 20 sur la face avant technique 31 de la caisse 30. Pour cela, on utilise de préférence des vis 21 venant coopérer avec des gorges 22 ménagées dans l'embase 23 et des écrous pour prendre en sandwich l'embase 23 entre la tête de vis 21 ou l'écrou correspondant et la caisse 30 ou la face avant technique 31 sur laquelle vient se fixer l'embase. Pour ce faire, des trous ou lumières sont ménagées dans la caisse ou la face avant technique pour coopérer avec les vis 21.

Puis on procède à une étape de montage de l'accumulateur 3 sur le support 20.

Alternativement, on procède à une étape de montage de l'accumulateur 3 sur le support 20 avant de procéder au montage du support 20 sur la caisse 30, en particulier via les vis 21 comme décrit précédemment.

On procède ensuite à une étape de branchement du ou des conduits 40 de climatisation sur l'accumulateur 3. A noter que cette étape de branchement du ou des conduits 40 de climatisation sur l'accumulateur 3 peut être réalisée préalablement à l'étape de fixation de l'accumulateur sur le support et/ou préalablement à l'étape de fixation du support sur la caisse.

Notamment en cas de véhicule destiné à un pays ou à un marché dans lequel les montants des assurances de véhicule sont calculés en fonction des frais occasionnés en termes de réparation lors d'un choc, on procède à une étape de montage du moyen d'amortissement 10 au niveau de l'accumulateur.

Plus précisément, dans le cas de moyen d'amortissement comprenant la première partie 11 et la deuxième partie 12 décrites précédemment, on procède dans un premier temps au montage de la première partie 11. Pour rappel, la première partie 11 est une portion cylindrique, par exemple s'étendant sur environ 240 degrés autour d'un axe confondu avec l'axe principal AP, c'est-à-dire une section globale en forme de C. Ainsi, on place la première partie 11 de sorte à ce que le ou les conduits se retrouvent dans la cavité du C et on procède à une translation de la première partie 11 le long de la partie supérieure 5 de l'enveloppe externe 4. Pour faciliter cette étape, de préférence, le diamètre externe de la partie supérieure 5 est inférieur au diamètre interne de la première partie 11. Notamment, le diamètre interne de la première partie 11 est tout juste supérieur, ou égal ou tout juste inférieur au diamètre externe du renflement 19. Eventuellement, une légère flexion de la forme en C de la première partie 11 permet de l'enfiler autour du renflement 11 si bien que le diamètre de la partie supérieure 5 peut avoir un diamètre égal au diamètre interne de la première partie 11. En cas de présence de l'encoche 16 dans la première partie 11, on la centre, on l'aligne de sorte à ce que l'encoche 16 coopère avec le support 20, notamment avec une partie haute de l'embase 23. On translate la première partie 11 jusqu'à ce qu'elle arrive en butée contre l'embase 23 au niveau de l'encoche 16 et/ou jusqu'à ce que la première partie 11 arrive au contact de la butée 25 du support 20 comme illustré sur la figure 4 notamment. On obtient alors la configuration accumulateur 3 / première partie 11 illustrée sur la figure 8.

Enfin, on procède à l'insertion de la deuxième partie 12 sur la première partie 11 de sorte à entourer la partie supérieure 5 de l'enveloppe externe 4 de l'accumulateur 3. Pour rappel, la deuxième partie 12 est une portion cylindrique, par exemple s'étendant sur environ 120 degrés autour d'un axe confondu avec l'axe principal AP, c'est-à-dire une section globale en forme d'arc. Plus précisément, on procède à une translation, selon la direction T (de préférence verticale) illustrée sur la figure 7, de la deuxième partie 12 le long de la première partie 11. Plus précisément, comme vu précédemment, un moyen 13 à chaque extrémité de la première partie 11 ayant une section en forme de C coopère avec un moyen 14 à chaque extrémité de la deuxième partie 12 ayant une section en forme d'arc pour engendrer une liaison glissière selon la direction T. De préférence, un jeu entre les moyens 13, 14 est prévu pour faciliter l'assemblage par coulissement sans phénomène de type arcboutement. Notamment, du jeu est nécessaire pour « passer » le renflement 19 au cours de la translation. En outre, de préférence la matière retenue pour les parties 11, 12 est suffisamment rigide pour éviter que chaque partie ne se torde, ne se courbe, ne flambe au cours de la translation, notamment en cas d'effort d'insertion, ce qui nuirait à un assemblage aisé. La translation est prolongée jusqu'au contact des échancrures 18 contre les saillies 17. De préférence, cette fin de course de translation est matérialisée également par le contact ou sensiblement le contact de la deuxième partie 12 contre la butée 25 du support 20, comme illustré sur la figure 3. Pour rappel, le renflement 19 permet d'éviter un coulissement inverse des parties 11, 12 et offre une sécurité au moyen 10 assemblé sur l'accumulateur 3.

Ainsi, la partie supérieure 5, de forme cylindrique le cas échéant, de l'enveloppe 4, se retrouve protégée, entourée, encerclée par les première et deuxième parties du moyen 10.

Grâce à la solution, les véhicules destinés aux pays dans lesquels des organismes évaluent la capacité à réparer et estiment les coûts afférents, notamment en cas de « petits » chocs, en particulier à l'avant des véhicules, peuvent être équipé facilement et rapidement du moyen d'amortissement de l'accumulateur. Cette opération est alors effectuée en bord de chaîne, ou en fin de chaîne d'assemblage du véhicule. La présence des conduits de climatisation ne gêne en rien l'opération d'ajout du moyen d'amortissement, celui-ci étant de préférence dissociable en deux parties. Au cas où cet ajout ou option ne concerne que quelques véhicules d'une chaîne de montage, il est facile de procéder ponctuellement à ce montage.

Ainsi, la solution permet de conserver l'intégrité de l'accumulateur en cas de petit choc avant en cas de châssis de véhicule comportant un faible porte à faux avant, notamment ne comprenant pas d'absorbeur de choc aussi nommé « crash box » en termes anglo-saxons, et par conséquent en cas de compartiment moteur exiguë, et ceci bien que l'accumulateur 3 du circuit de climatisation 2 soit agencé à l'avant du compartiment moteur. Malgré que l'accumulateur présente un volume conséquent qui empêche son intégration dans une autre zone du compartiment moteur, la solution permet son implantation en zone avant particulièrement exposée en cas de choc avant. Grâce à la solution, l'accumulateur est protégé si bien qu'il n'est pas nécessaire de le changer en cas de choc. Ainsi, on procède à des économies, un accumulateur étant onéreux à l'achat et son remplacement étant chronophage et fastidieux, notamment du fait qu'il fait partie du circuit de climatisation.

En résumé, la solution offre une protection de la bouteille déshydrateur 3 de climatisation. Il en résulte une meilleure note par un organisme de notation en cas de choc et par conséquent un montant d'assurance moins élevé.

On évite ainsi toute déformation plastique au niveau du contact entre l'élément 8 (figure 2) et l'enveloppe 4 de l'accumulateur lors d'un choc avant. En effet, le moyen d'amortissement 10 de type cache, capot, protection, notamment en mousse, inséré sur l'accumulateur amortit, se déforme, protège l'accumulateur.

Comme vu précédemment, la solution est simple, facile et rapide à installer. Ainsi, le surcoût est très faible ce qui est souhaitable d'autant que cette fonction n'est pas visible par le client /utilisateur du véhicule.

La solution ne nécessite aucune modification du véhicule, le moyen d'amortissement étant ajouté, le cas échéant, en cours d'assemblage du véhicule, voire en seconde monte si besoin. En outre, le moyen d'amortissement 10 demeure démontable si besoin, aisément, sans outil de préférence, en faisant coulisser la deuxième partie 12 vers le haut, après avoir passé le point dur créé par le renflement 19 présent sur la bouteille 4, puis en faisant coulisser la première partie 11. Ainsi, une intervention sur la bouteille 4, ou un changement du moyen d'amortissement sont compatibles avec la solution. Pour rappel, la protection est de type pièce en mousse, relativement dense, en deux parties et deux contre formes en T pour s'emmancher l'une dans l'autre, créant une forme circulaire, cylindrique, de coque 15. De préférence, le positionnement selon la direction verticale du protecteur 10 est assuré par contact du protecteur contre le support 20, par exemple au niveau de l'échancrure 16 ménagée sur la partie 11. Ainsi, de préférence, la protection 10 est ajoutée sur la bouteille 3 déjà fixée sur son support 20.

Comme vu précédemment, outre la présence du moyen d'amortissement 10, un recul de l'accumulateur peut être recherché en cas de choc, afin de maximiser l'amortissement. Ce recul est par exemple permis par la présence d'au moins un plot, de préférence deux plots de filtration 24 ou diabolos ou Silentbloc (Marque déposée), par exemple comprenant du caoutchouc (voir figures 4 et 6). A noter que de tels plots 24 améliorent le cas échéant l'acoustique de l'assemblage accumulateur / support. La déformation offerte par ce ou ces plots 24 permet alors un recul de l'accumulateur lors d'un choc.

En cas d'absence de plots, par exemple en l'absence de problème vibratoire, le recul de l'accumulateur est avantageusement favorisé. Une liaison sécable, par exemple dotée d'une faiblesse dans le support, est prévue.

En complément, ou alternativement, les gorges ou ouvertures 22 du support 20 offre une possibilité de recul du déshydrateur 3 par rapport à la caisse au sein du compartiment moteur si besoin, en cas de choc avant. Plus précisément, les gorges 22 permettent aux vis 21 de s'échapper, c'est-à-dire de laisser glisser le support vers l'arrière en cas de choc avant, notamment en cas de contact de l'élément 8 (figure 2) contre la protection 10.

Avantageusement, les tuyaux ou conduits 40 du système ou circuit de climatisation sont raccordés à l'accumulateur tout en présentant des longueurs de flexible, et/ou du « mou », et/ou les conduits sont conformés de sorte à pouvoir être pliés. Autrement dit, le déplacement de l'accumulateur, en particulier son recul, ne crée pas d'amorce de rupture, ni de rupture, ni de marquage sur ces conduits 40 susceptible d'engendrer un dysfonctionnement de la climatisation voire une fuite du circuit de climatisation.

Comme vu précédemment, de préférence, la densité, notamment en cas de matériau de type polypropylène expansé, est de l'ordre de 80g/l. De préférence, une telle densité vise à offrir une protection 10 peu compressible. En cas de choc, le recul est privilégié et/ou vient en complément d'une déformation du moyen d'amortissement.

En résumé, le moyen d'amortissement 10 évite une déformation plastique de l'accumulateur en cas de petit choc avant notamment. Les réparations suite à un choc avant sont alors minorées, notamment en évitant l'achat d'un nouvel accumulateur et la main d'oeuvre pour procéder à son remplacement. Le montant de l'assurance d'un véhicule équipé d'un tel agencement est réduit ce qui est avantageux pour le propriétaire d'un tel véhicule et peut motiver éventuellement son acte d'achat, en particulier en cas d'achat de nombreux véhicules ou flotte ainsi équipés. En outre, la solution est économique, la fabrication du moyen d'amortissement étant bon marché.

En remarque, la solution atteint donc l'objectif recherché de protéger l'accumulateur de climatisation en cas de choc et présente l'avantage de pouvoir être adaptée à un autre engin motorisé, par exemple un bus ou un camion.

## Revendications

1. Agencement (9) pour un véhicule, notamment pour un véhicule automobile (1), l'agencement (9) comprenant :
- un accumulateur (3) pour un circuit de climatisation (2), l'accumulateur (3) comprenant une enveloppe externe (4),
- un élément (8) agencé à proximité de l'accumulateur (3), notamment un élément de type patte de fixation,
**caractérisé en ce que** l'agencement (9) comprend un moyen d'amortissement (10) conformé au moins partiellement autour de l'enveloppe externe (4) de l'accumulateur (3) de sorte à éviter une déformation plastique de l'enveloppe externe (4) en cas de contact avec l'élément (8) suite à un choc subi par un tel véhicule.

2. Agencement (9) selon la revendication précédente, **caractérisé en ce que** le moyen d'amortissement (10) comprend une première partie (11) et une deuxième partie (12) pour permettre un montage ultérieur du moyen d'amortissement (10) au niveau de l'enveloppe (4) de l'accumulateur (3) s'étendant le long d'un axe de révolution ou axe principal (AP).

3. Agencement (9) selon la revendication précédente, **caractérisé en ce que** la première partie (11) comprend un premier moyen de fixation (13) et **en ce que** la deuxième partie (12) comprend un deuxième moyen de fixation (14), le premier moyen de fixation (13) étant apte à coopérer avec le deuxième moyen de fixation (14).

4. Agencement (9) selon la revendication précédente, **caractérisé en ce que** le premier moyen de fixation (13) et le deuxième moyen de fixation (14) forment ensemble une liaison glissière, notamment selon la direction verticale ou sensiblement verticale, ou notamment selon l'axe de révolution ou axe principal (AP) de l'accumulateur (3).

5. Agencement (9) selon l'une des revendications 2 à 4, **caractérisé en ce que** la premier partie (11) comprend un premier décrochement (17) et **en ce que** la deuxième partie (12) comprend un deuxième décrochement (18), les premier et deuxième décrochements (17, 18) venant au contact l'un de l'autre pour assurer un blocage de la première partie (11) par rapport à la deuxième partie (12), notamment selon la direction verticale.

6. Agencement (9) selon l'une des revendications 2 à 5, **caractérisé en ce que** l'enveloppe externe (4) de l'accumulateur (3) a une forme sensiblement cylindrique autour de l'axe principal (AP), les première et deuxième parties (11, 12) du moyen d'amortissement (10) formant une coque cylindrique (15) d'axe confondu ou sensiblement confondu avec l'axe principal (AP), l'axe principal (AP) s'étendant notamment sensiblement verticalement.

7. Agencement (9) selon la revendication précédente, **caractérisé en ce que** l'épaisseur (E) du moyen d'amortissement (10) mesurée radialement par rapport à l'axe principal (AP) est comprise entre 10 mm et 25 mm, notamment de l'ordre de 17 mm, et/ou **en ce que** le moyen d'amortissement (10) est en polypropylène expansé ou en polystyrène ayant une densité comprise entre 45 grammes par litre et 200 grammes par litre, notamment comprise entre 70 grammes par litre et 90 grammes par litre.

8. Agencement (9) selon l'une des revendications précédentes, **caractérisé en ce que** l'agencement (9) comprend :
- une caisse (30) d'un tel véhicule,
- au moins un conduit (40) de climatisation connecté à l'accumulateur (3), et
- un support (20) pour la fixation de l'accumulateur (3) sur la caisse (30).

9. Agencement (9) selon la revendication précédente, **caractérisé en ce que** le support (20) crée une butée (25) lors de la mise en place du moyen d'amortissement (10), notamment selon la direction verticale, notamment par contact du moyen d'amortissement (10) avec le support (20).

10. Agencement (9) selon l'une des revendications 8 ou 9, **caractérisé en ce que** le support (20) est fixé sur la caisse (30) par au moins un moyen de fixation (21), notamment de type vis,
l'au moins un moyen de fixation (21) prenant en sandwich le support (20) entre le moyen de fixation (21), notamment une tête de vis, et la caisse (30),
l'au moins un moyen de fixation (21) traversant au moins une gorge (22) ménagée dans le support (20), l'au moins une gorge (22) étant débouchante et s'étendant sensiblement longitudinalement vers l'avant, de sorte à permettre le recul du support (20) par rapport à la caisse (30) par glissement du support (20) contre le moyen de fixation (21) le long de la gorge (22) en cas de choc à l'avant d'un tel véhicule.

11. Véhicule, notamment véhicule automobile (1), **caractérisé en ce que** le véhicule comprend un agencement (9) selon l'une des revendications précédentes.

12. Procédé de montage d'un agencement (9) selon l'une des revendications 8 à 10, **caractérisé en ce qu'**il comprend :
- une étape de fourniture d'une caisse (30), d'un support (20), d'un accumulateur (3), d'au moins un conduit (40) de climatisation, et d'un moyen d'amortissement (10),
- suivie d'une étape de montage du support (20) sur la caisse (30) puis du montage de l'accumulateur (3) sur le support (20), ou d'une étape de montage de l'accumulateur (3) sur le support (20) puis du montage du support (20) sur la caisse (30),
- suivie ou précédée d'une étape de branchement de l'au moins un conduit (40) de climatisation sur l'accumulateur (3),
- suivie d'une étape de montage du moyen d'amortissement (10) au niveau de l'accumulateur (3).
